# EUROPEAN PATENT APPLICATION

(11) **EP 3 252 432 A1**
(43) Date of publication of application: **06.12.2017**
(21) Application number: 17174326.3
(22) Date of filing: 02.06.2017
(51) Int. Cl.: G01C 21/36, G06F 3/01

(54) **INFORMATION-ATTAINMENT SYSTEM BASED ON MONITORING AN OCCUPANT**

(30) Priority: 03.06.2016 US 201615173594
(71) Applicant: Toyota Motor Sales, U.S.A., Inc., Torrance, CA 90509 (US)
(72) Inventor: Schulz, Jason A., Torrance, CA California 90509 (US)
(74) Representative: D Young & Co LLP

(57) **Abstract**

Arrangements herein relate to an information-attainment system and a method of operating same. The system can include an inquiry input system to receive an inquiry for a point-of-interest (POI). The system can also include an occupant monitoring system to determine a potential occupant vector with respect to the POI. The system can further include a processor and a location determination system to acquire positioning information that is directly associated with the POI based on the potential occupant vector. The processor can receive the inquiry for the POI and the positioning information directly associated with the POI based on the potential occupant vector. In response to the receipt of the inquiry for the POI and the positioning information, the processor can be configured to identify the POI and acquire information associated with the POI that is responsive to the inquiry.

## Description

### FIELD

The subject matter described herein relates in general to systems for acquiring and providing information to vehicle occupants and more particularly to systems for acquiring and providing information about points of interest (POI) to vehicle occupants.

### BACKGROUND

In modern vehicles, there are many systems that provide information to the occupants of such vehicles. For example, many vehicles include systems that monitor vehicle parameters, like vehicle speed, fuel level, and mileage. Over the years, vehicle manufacturers have installed other systems that provide relevant information to occupants, like global positioning satellite (GPS) modules and video media players. These advances have improved driving experiences for the occupants. In particular, an occupant can rely on a GPS module to provide maps and driving directions to a particular location. A GPS module may also provide pre-programmed tidbits of information about certain POIs, such as the name and location of restaurants, gas stations, and hospitals. While helpful, many of the user interfaces for these systems are awkward, and an occupant of a vehicle may find it difficult to obtain information about a location that interests the occupant. This disadvantage is even more pronounced if the occupant wishes to acquire information about the location while the vehicle is operated.

### SUMMARY

As noted above, manufacturers have implemented systems in vehicles to provide various types of information to occupants of the vehicles, like GPS modules. These systems, while helpful, provide scant information about points-of-interest (POI), particularly those POIs that are not pre-programmed into the GPS modules, and are difficult to use. As presented herein, an information-attainment system can assist occupants of the vehicle in learning information about a particular POI through an automated process.

To support this feature, the system can include an inquiry input system that can be configured to receive input from an occupant of a vehicle, wherein the input is related to an inquiry for a POI. The system can also include an occupant monitoring system that can be configured to determine a potential occupant vector with respect to the POI and can further include a location determination system. The location determination system can be configured to acquire positioning information that can be directly associated with the POI based on the potential occupant vector. In addition, the system can include a processor that can be configured to receive from the inquiry input system the input related to the inquiry for the POI and receive from the location determination system the positioning information directly associated with the POI based on the potential occupant vector. The processor may also be configured to - in response to the receipt of the input related to the inquiry for the POI and the positioning information directly associated with the POI - identify the POI and acquire information associated with the POI that is responsive to the inquiry.

Another information-attainment system for a vehicle is presented herein and can include an input inquiry device that may be configured to receive an inquiry from the occupant for a POI located external to the vehicle. The system may also include one or more tracking devices, a location determination device, and a display device. The tracking devices may be configured to monitor at least one measurable directional characteristic of an occupant of the vehicle for determining a potential occupant vector with respect to the POI. In addition, the location determination device can be configured to acquire positional information of the POI, and the display device can be configured to display information about the POI that is responsive to the inquiry. The information that is responsive to the inquiry may arise from the potential occupant vector determined with respect to the POI and the positional information of the POI.

A method for acquiring information about a POI that is external to a vehicle is also described herein. The method can include the steps of detecting an inquiry from an occupant of the vehicle for the POI and in response to the inquiry, determining one or more directional characteristics of the occupant. Based on the directional characteristics, a potential occupant vector can be determined with respect to the POI. Based on the potential occupant vector, positional information of the POI can be acquired, and based on the positional information of the POI, the POI can be identified. The method can also include the step of providing to the occupant information about the POI that is responsive to the inquiry.

### BRIEF DESCRIPTION OF THE DRAWINGS

FIG. 1 is an example of a vehicle in a driving operation.
FIG. 2 is an example of a passenger compartment that is part of the vehicle of FIG. 1.
FIG. 3 is an example of a block diagram that illustrates several components of an information-attainment system.
FIG. 4 is an example of a method for acquiring information about a point-of-interest (POI).
FIG. 5 is an example of an environment that illustrates several POIs and potential occupant vectors.
FIG. 6 is an example of a block diagram of several systems that may be used to identify POIs.

### DETAILED DESCRIPTION

There are several systems in vehicles that provide information about the vehicle to its occupants, such its speed and fuel level. Over the years, more interactive systems have been incorporated into vehicles to provide a greater amount of information, such as GPS modules and entertainment systems. In particular, GPS modules may provide inconsequential information about certain pre-programmed points-of-interest (POI). While somewhat helpful, these devices are difficult to operate, particularly if an occupant wishes to obtain information about a POI while the vehicle is being driven.

An information-attainment system for addressing this issue is presented herein. As an example, the information-attainment system may include an inquiry input system that can be configured to receive input from an occupant of a vehicle, wherein the input is related to an inquiry for a POI. The system can also include an occupant monitoring system that can be configured to determine a potential occupant vector with respect to the POI and can further include a location determination system. The location determination system can be configured to acquire positioning information that can be directly associated with the POI based on the potential occupant vector.

In addition, the system can include a processor that can be configured to receive from the inquiry input system the input related to the inquiry for the POI and receive from the location determination system the positioning information directly associated with the POI based on the potential occupant vector. The processor may also be configured to - in response to the receipt of the input related to the inquiry for the POI and the positioning information directly associated with the POI - identify the POI and acquire information associated with the POI that is responsive to the inquiry.

Accordingly, an occupant of the vehicle may request and receive on an automated basis information about a POI that is external to the vehicle. The systems of the vehicle may automatically identify the POI and fetch relevant information about the POI on behalf of the occupant, which reduces the dangers of distracted driving. This information, which can include any material that is relevant to the POI, can be presented to the occupant in any number of perceptible forms for the occupant, such as visually through a heads-up display.

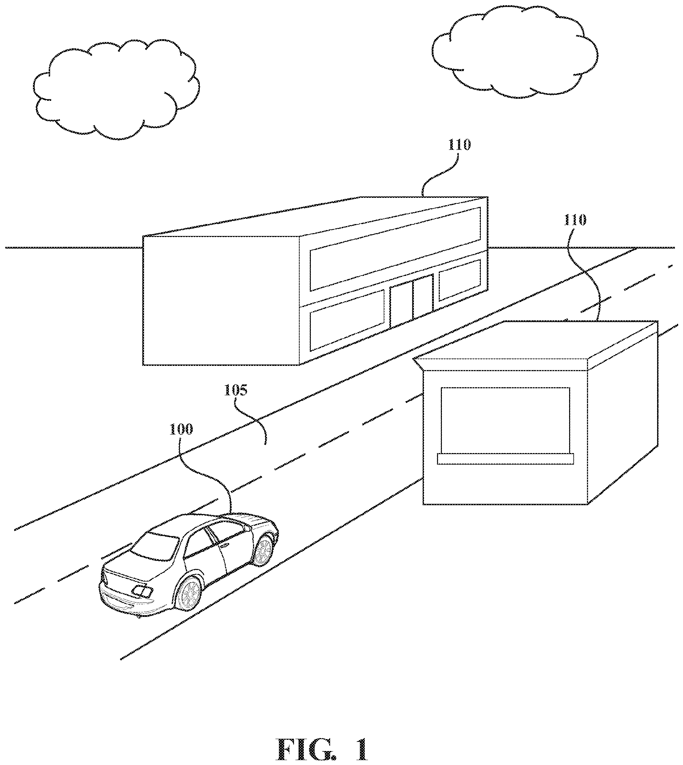

Detailed embodiments are disclosed herein; however, it is to be understood that the disclosed embodiments are intended only as exemplary. Therefore, specific structural and functional details disclosed herein are not to be interpreted as limiting, but merely as a basis for the claims and as a representative basis for teaching one skilled in the art to variously employ the aspects herein in virtually any appropriately detailed structure. Further, the terms and phrases used herein are not intended to be limiting but rather to provide an understandable description of possible implementations. Various embodiments are shown in FIGS. 1-6, but the embodiments are not limited to the illustrated structure or application.

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. Those of skill in the art, however, will understand that the embodiments described herein can be practiced without these specific details.

Several definitions that are applicable here will now be presented. The term "vehicle" is defined as a conveyance that provides transport to humans, animals, machines, cargo, or other objects. A "sensor" is defined as a component or a group of components that are sensitive to one or more stimuli, such as light, temperature, motion, speed, radiation, pressure, etc., and that provide some signal that is proportional or related to the stimuli. A "tracker" or "tracking device" is defined as a component or group of components that are configured to monitor and detect variations in one or more phenomena associated with one or more occupants or individuals, such as biological phenomena or any environmental changes caused by biological phenomena. A "processor" is defined as a hardware component or group of hardware components that are configured to execute instructions or are programmed with instructions for execution (or both), and examples include single and multi-core processors and co-processors. The term "communication stack" is defined as one or more components that are configured to support or otherwise facilitate the exchange of communication signals, including through wired connections, wireless connections, or both. A "docking interface" is defined as a physical interface that is configured to communicatively couple to a portable computing device, either through a wireless connection, a wired connection, or both. A "database" is defined as a hardware memory structure (along with supporting software or file systems, where necessary for operation) that is configured to store a collection of data that is organized for access.

An "occupant" is defined as a person, animal, or machine that is transported or transportable by a vehicle. The term "point-of-interest" (POI) is defined as any man-made structure or article of nature that is perceptible by an occupant through sensory or sensor interaction and is, may be, or may eventually be the subject of interest by that occupant or another occupant. The phrase "to identify a POI" is defined as to positively or potentially identify a POI that is of interest to an occupant.

The term "positioning information" is defined as information that identifies a physical location of an object. Positioning information may or may not include the altitude of the object and examples of positioning information include street addresses or one or more values of a geographic coordinate system. The term "vector" is defined as a quantity associated with an occupant that includes at least a direction of focus of the occupant and in some cases, a magnitude associated with the occupant. An example of a magnitude associated with an occupant a rate at which the occupant (or the vehicle in which the occupant is traveling) is moving in relation to a POI or a degree of elevation of the occupant (or the vehicle in which the occupant is traveling). The term "potential occupant vector" is defined as one or more possible vectors associated with an occupant. A "measurable characteristic" or a "measurable directional characteristic" is a measurable factor associated with a subject that is for determining or helping to determine a direction of focus, interest, or attention for that subject. Additional definitions may be presented throughout the remainder of this description.

Referring to FIG. 1, an example of a vehicle 100 in a driving operation is shown. In this example, the vehicle 100 is an automobile, although it may be a motorcycle, an all-terrain vehicle (ATV), a snow mobile, a watercraft, an aircraft, a bicycle, a carriage, a locomotive or other rail car, a go cart, a golf cart or some other mechanized or even biological form of transport. In some cases, the vehicle 100 may be an autonomous vehicle, or a vehicle in which one or more computing systems are used to navigate and/or maneuver the vehicle 100 along a travel route with minimal or no input from a human driver. If the vehicle 100 is capable of autonomous operation, the vehicle 100 may also be configured to switch to a manual mode, or a mode in which a human driver controls most of the navigation and/or maneuvering of the vehicle along a travel route

In this case, the vehicle 100 may be traveling along a surface 105, such as a road or highway, although the surface 105 may be any surface or material that is capable of supporting and providing passage to vehicles. Non-limiting examples include roads, parking lots, highways, interstates, runways, off-road areas, waterways, or railways. There may be any number of points-of-interests (POI) 110 along or some distance away from the surface 105 that are external to the vehicle 100, which can be any structure (man-made or a natural object) that may be of interest to one or more occupants (not shown here) of the vehicle 100.

In many cases, a POI is a fixed object with a predetermined position, particularly with respect to maps (paper or digital) or other reference materials, although a POI, for purposes of this description, is not necessarily limited to being a stationary object. That is, a POI may be an object that is capable of movement, so long as its position is capable of being determined or updated by any number of suitable positioning services, like a digital map that is GPS-based. There are multiple examples of POIs, some of which are listed as follows: buildings; bridges; roads; power stations; antennae and other networking equipment; trails; parks; vehicles or other mechanized objects; historical monuments, places, or markers; mountains (or ranges thereof); bodies of water; entire neighborhoods, villages, or cities; airports; or seaports. This listing is not meant to be exhaustive, as many other objects may be a POI.

An occupant of the vehicle 100, which may be a passenger or a driver of the vehicle 100, may wish to learn additional information about a particular POI. As will be explained below, the occupant can initiate an automated process that identifies the POI, retrieves relevant information about the POI, and presents the information to the occupant in a useful manner. Additional details on this process and several exemplary structural components for facilitating it will be presented below.

Referring to FIG, 2, an example of a passenger compartment 200 that may be part of the vehicle 100 of FIG. 1 is shown. In this example, an occupant 205 is shown in the passenger compartment 200, and the occupant 205 is driving the vehicle 100, although an occupant 205 may also be a passenger for purposes of this description. The view presented here is similar to that of the occupant 205, or directed towards a front windshield 210 of the vehicle 100. As can be seen, there are several POIs 110 that are visible to the occupant 205.

In one arrangement, the passenger compartment 200 may include an inquiry input system 215 (or system 215), which can include any suitable combination of circuitry and software to detect and process various forms of input from the occupant 205, such as that which is directed to learning more about a POI 110. As an example, the system 215 can include a voice recognition device 220, which can be configured to detect voice or other audio generated by the occupant 205 that is representative of a command. In many cases, the command may be an inquiry directed to obtaining information about a particular POI 110, although the voice recognition device 220 may be configured to process numerous other commands.

As another example, the system 215 may include a gesture recognition device 225, which can include any suitable combination of circuitry and software for identifying and processing gestures from the occupant 205 (or some other occupant). For example, the gesture recognition device 225 may be able to detect and identify hand or facial gestures exhibited by the occupant 205, which can be used to start a search for more information about a POI 110. In one embodiment, the gesture recognition device 225 may be fixed to some part of the passenger compartment 200, and the occupant 205 may direct any relevant gestures towards the device 225. As another example, at least a part of the gesture recognition device 225 may be portable, meaning the occupant 205 could manipulate the device 225 in a predetermined manner to initiate the search about the POI 110, such as by moving the device 225 in a back-and-forth motion. In this example, the gesture recognition device 225 can be communicatively coupled to an interface (not shown here) of the passenger compartment 200, either wirelessly or through a wired connection.

The passenger compartment 200 may also include a location determination system 230 (or system 230), a portion of which may include a user interface 235 that may be shown on one or more display devices 240. In one arrangement, the system 230 may include any suitable combination of circuitry and software to acquire positioning information of the vehicle 100 and positioning information that is directly associated with a POI 110. The phrase "positioning information that is directly associated with a POI" is defined as positioning information of a POI and is separate from the positioning information of the vehicle from which an inquiry about the POI originates. As an example, the system 230 may be based on a satellite positioning system, such as the U.S. Global Positioning System (GPS). The positioning information can include coordinates derived from the satellite positioning system, like GPS coordinates.

To assist in identifying POIs 110, the passenger compartment 200 may be equipped with an occupant monitoring system 245 (or system 245). In particular, the system 245 can include any number and type of tracking devices or trackers that can be configured to monitor one or more measurable or directional characteristics of the occupant 205 for determining a potential occupant vector with respect to a POI 110. By monitoring these characteristics, the system 245 can determine a direction of interest or focus for the occupant 205. In addition to the tracking devices, the system 245 may include supporting software and circuitry to receive and process data gathered by the tracking devices. Once the direction of interest is determined, it can be used to assist in the identification of the POI 110, a process that will be described more fully below.

To enable the monitoring of the measurable characteristics, the system 245 can include, for example, one or more eye trackers 250, one or more body trackers 255, and one or more audio trackers 260. The eye trackers 250 may be configured to track the movements or gaze of the eyes of the occupant 205, while the body trackers 255 may be designed to monitor the positioning of one or more body parts of the occupant 205, such as the head or arms of the occupant 205. Further, the audio trackers 260 may be configured to detect audio that may be generated directly (or indirectly) by the occupant 205, such as breathing sounds.

Additional trackers may be part of the system 245, such as one or more pressure trackers 265 and one or more respiratory trackers 270. In particular, a pressure tracker 265 may be configured to detect changes in pressure at a certain location that may be based on the movement or repositioning of the occupant 205. As an example, the pressure trackers 265 may be embedded in a seat 267 of the passenger compartment 200, which is represented by the dashed outline of the pressure trackers 265. The respiratory tracker 270 can be configured to detect concentrations of one or more gases, which may be indicative of a direction in which the face of the occupant 205 is focused. For convenience, each of the trackers listed above that may be part of the occupant monitoring system 245 may be collectively referred to as "trackers" or "tracking devices" in this description. The context in which these terms are used throughout this description should apply to each of the trackers recited here, except if expressly noted. For example, if a passage indicates that a tracker may be positioned at a certain location in the passenger compartment 200, then this arrangement may apply to all the trackers recited in this description. Moreover, the occupant monitoring system 245 may include all or fewer of the trackers listed above, and may have other trackers not expressly recited here. Additional information on these trackers will be presented below.

In one arrangement, the trackers may be positioned in the passenger compartment 200 so that they (or at least a majority of them) are aimed towards the face of the occupant 205 when the occupant 205 faces the front windshield 210. As an example, at least some of the trackers may be incorporated into one or more of the following components of the vehicle 100: a dashboard, a visor, the ceiling or support columns of the passenger compartment 200, a rear- or side-view mirror, the steering wheel, or one or more seats. These examples are not meant to be exhaustive, as there are other suitable locations of a vehicle that are capable of supporting a tracker, provided such locations are useful for monitoring some characteristic of an occupant.

Several examples of tracking devices that may be configured to monitor one or more measurable characteristics associated with an occupant of a vehicle were presented above. Examples of measurable characteristics are listed as follows: eye position and eye movement; head position and head movement; direction and magnitude of audio propagation, such as voice direction and voice loudness; differences in air pressure, such as variations produced from breathing by an occupant; seat pressure, including variations thereof; and concentrations of one or more gases, like carbon dioxide that is exhaled by an occupant. This listing of characteristics is not meant to be exhaustive, as other measurables associated with an occupant may be used here.

As previously noted, the passenger compartment 200 may include one or more display devices 240. The display device 240 may be positioned in the passenger compartment 200 to enable the occupant 205 to see any information that is displayed. In one embodiment, the display device 240 may be an in-dash display, a heads-up display (HUD), or can contain both types. A HUD, as is known in the art, can project an image 280 in a manner such that the occupant 205 is not required to look away from the front windshield 210 to see the image. In another arrangement, the passenger compartment 200 may include one or more speakers 285 and one or more docking interfaces 290, which can be configured to dock with a portable computing device 295.

When information about a POI 110 is obtained, this information may be presented to the occupant 205 in any suitable manner. For example, the information may be displayed on the display device 240, including through an image 280 in the case of a HUD. As another example, information about the POI 110 can be in audio form broadcast through the speakers 285. In yet another example, the information about the POI 110 may be delivered to the portable computing device 295. In particular, the portable computing device 295, which can be, for example, a smartphone or tablet, may be docked with the docking interface 290. This coupling may be through a wired connection or may be achieved wirelessly. In either case, the information obtained about the POI 110 may be sent to the portable computing device 295 through the docking interface 290. Because the portable computing device 295 may have one or more applications installed on it, the information sent to the device 295 can be used by these applications. Examples of this feature will be presented below.

In another embodiment, the occupant monitoring system 245 can include one or more cameras 297 that may be configured to capture images that are external to the vehicle 100. The cameras 297 may be positioned outside the vehicle 100, such as being attached to a portion of a frame of the vehicle 100. Alternatively, the cameras may be positioned inside the passenger compartment 200, where they may have a substantially unobstructed view of the environment outside the vehicle 100. In this setting, the cameras 297 may be attached to a frame of a window of the front windshield 210 and aimed towards the outside of the vehicle 100. As another alternative, the vehicle 100 may also be equipped with cameras 297 located both inside and outside the passenger compartment 200.

No matter the number and positioning of the cameras 297, at least some of them may be capable of pivoting in a number of directions. As such, these cameras 297 may be pivoted in accordance with some external factor. For example, the cameras 297 may be pivoted based on the potential occupant vector that is realized by the occupant monitoring system 245 for a particular POI 110. That is, the cameras 297 may be configured to essentially track the occupant 205 as the occupant 205 fixates on a particular POI 110, and the cameras 297 may capture images external to the vehicle 100 that correspond to this POI 110. As will be explained later, this feature may serve as an additional solution for helping to identify POIs 110.

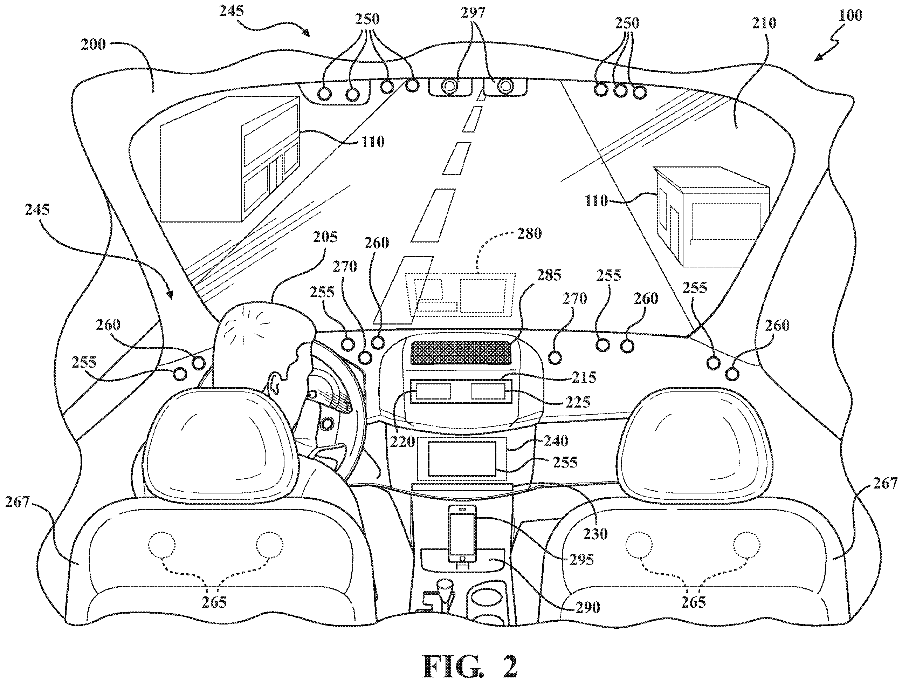

Although only one occupant (occupant 205) is shown in the passenger compartment 200 in FIG. 2, and much of the description here focuses on this individual occupant 205, the embodiments presented herein are not so limited. Specifically, any number of occupants may be transported by the vehicle 100, and any one of them may take advantage of the systems presented here to obtain information about a POI 110. To accommodate these occupants, the systems and devices described above may be positioned in various locations of the passenger compartment 200 to allow the occupants to initiate an inquiry, to enable their relevant characteristics to be monitored, and to be presented with information related to the POI 110. For example, a number of tracking devices may be placed in a rear seating area (not shown) of the passenger compartment 200, such as being embedded in the back of a front seat of the compartment 200. As another example, one or more display devices 240 or docking interfaces 290 may be situated in the rear seating area to enable occupants seated in this section to realize the advantages provided by the systems and processes described herein.

In another arrangement, a combination of occupants may work in tandem to acquire information about a POI 110. For example, an inquiry for information related to a POI 110 may be initiated by a first occupant of the passenger compartment 200, but the identification of the POI 110 may be based on the measurable characteristics of a second occupant. In addition, the presentation of the information about the identified POI 110 may be provided to any number of occupants in the vehicle 100. Other suitable combinations in accordance with this feature may be applicable for obtaining the information about a POI 110.

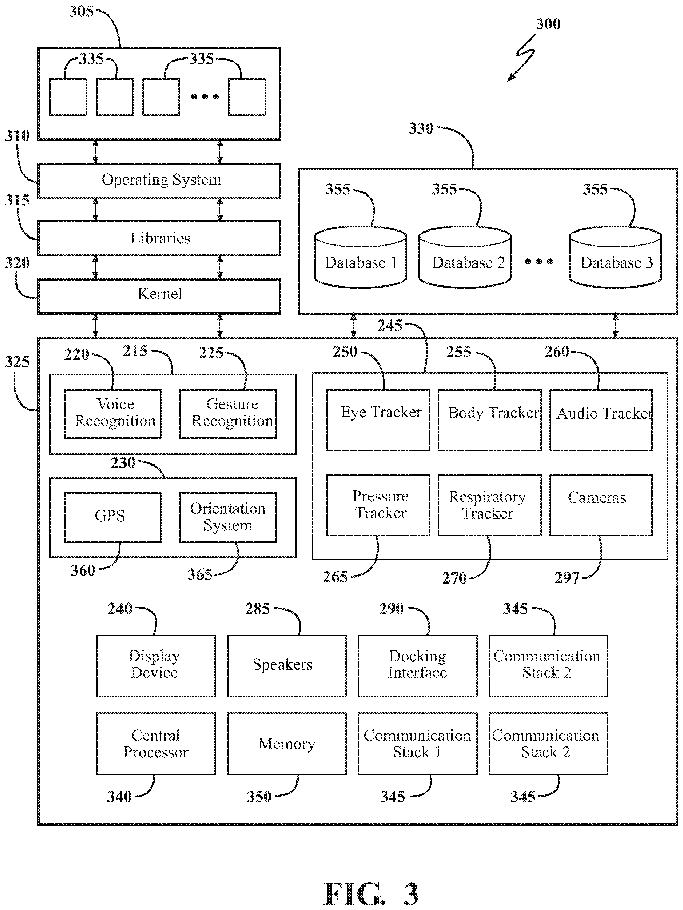

Referring to FIG. 3, an example of a block diagram of an information-attainment system 300 is illustrated. The information-attainment system 300 (or system 300) may be representative of and may include at least some of the components described in reference to FIGS. 1 and 2, although the system 300 is not necessarily limited to those components. The description associated with FIG. 3 may expand on some of the components and processes presented in the discussion of FIGS. 1 and 2, although the additional explanations here are not meant to be limiting.

In one arrangement, the information-attainment system 300 can include an application layer 305, an operating system (OS) 310, one or more libraries 315, a kernel 320, a hardware layer 325, and a database layer 330. The application layer 305 may include any number of applications 335, which may serve as an interface to enable an occupant to interact with the system 300 and to execute any number of tasks or features provided by the system 300. For example, an occupant may launch an application 335 to enable the occupant to initiate an inquiry about a POI 110, adjust a temperature setting of the passenger compartment 200, or access a digital map associated with a GPS-based system. As an option, the applications 335 may be displayed on the display device 240 or the image 280 from a HUD, and the occupant may launch an application by selecting it through the display device 240 or the image 280.

The OS 310 may be responsible for overall management and facilitation of data exchanges and inter-process communications of the information-attainment system 300, as well as various other systems of the vehicle 100. The libraries 315, which may or may not be system libraries, may provide additional functionality related to the applications 335 and other components and processes of the system 300. The kernel 320 can serve as an abstraction layer for the hardware layer 325, although in some cases, a kernel may not be necessary for the system 300. Other abstraction layers may also be part of the system 300 to support and facilitate the interaction of the applications 335 with the lower levels of the system 300, although they may not be illustrated here.

The hardware layer 325 may include various components to facilitate the processes that are described herein. For example, the hardware layer 325 may include the inquiry input system 215, the location determination system 230, the occupant monitoring system 245, a central processor 340, one or more communication stacks 345, the display device(s) 240, the speaker(s) 285, the docking interface 290, and one or more memory units 350.

As explained above, the inquiry input system 215 can be configured to receive and identify cues from an occupant or another device to initiate the process for obtaining information about a POI 110. In this example, the inquiry input system 215 can include the voice recognition device 220 and the gesture recognition device 225, although other devices may be part of the system 215. As an alternative, the system 215 is not necessarily required to include both the voice recognition device 220 and the gesture recognition device 225. In any event, the voice recognition device 220 can be configured to detect audio signals that are designed to trigger the inquiry process. As an example, the audio signals may be voice signals or other noises generated by an occupant, or, as another example, they may be sounds generated by a machine, such as one under the control of the occupant. In the case of audio signals generated by the machine, the audio signals may be outside the frequency range of human hearing. Reference audio signals may be digitized and stored in a database 355, and the audio signals captured by the voice recognition device 220 may be digitized and mapped against these reference signals to identify an inquiry.

The gesture recognition device 225 may be configured to detect and identify gestures exerted by an occupant. A gesture may be a form of non-verbal communication in which visible human bodily actions and/or movements are used to convey a message, although verbal communications may be used to supplement the non-verbal communication. As an example, gestures include movement of the hands, fingers, arms, face, eyes, mouth, or other parts of the body of an occupant. As an option, the gesture recognition device 225 may be designed to also detect and identify gestures produced by a machine. For example, the gesture recognition device 225 may be configured to detect and identify certain light patterns or frequencies that may serve as triggers for an inquiry. In one embodiment, the gesture recognition device 225 may include one or more cameras for detecting gestures. The cameras may be internal to the gesture recognition device 225, or the gesture recognition device 225 may use cameras that are external to it, such as some of the cameras 297 (see FIG. 2), particularly any of the cameras 297 that may be positioned inside the passenger compartment 200. No matter the trigger that can act as a gesture, a set of digitized reference signals may be part of one of the databases 355, and the gesture recognition device 225 may map the received gestures against this set of reference gestures.

There are several ways an occupant may start an action with the inquiry input system 215. For example, the occupant may simply announce a predetermined voice command or may perform a predetermined gesture to initiate the inquiry about a POI 110. As another example, the occupant may select an application 335, which can be displayed on the display device 240 or through the image 280 of the HUD, to initiate an inquiry through the system 215. There are yet other ways for an occupant to provide input to the system 215. For example, the system 215 can include a keypad, button, joystick, mouse, trackball, microphone and/or combinations thereof to enable the occupant to provide the input.

As previously noted, the location determination system 230 can be designed to obtain positional information, particularly positional information of a POI 110. In one arrangement, the location determination system 230 (system 230) can include a GPS unit 360 and an orientation system 365, although the system 230 is not necessarily required to include both the GPS unit 360 and the orientation system 365 and can include other devices for determining positional information.

The GPS unit 360 may receive input from one of the communication stacks 345, which may be a satellite-based communication stack, to determine the positioning of the vehicle 100 and any other relevant object. The GPS unit 360 may also access any number of digital maps from one of the databases 355, depending on the location of the vehicle 100 and/or the POI 110. The orientation system 365 can be configured to determine and provide readings on the orientation of the vehicle 100. This data may be useful in determining potential occupant vectors with reference to a POI 110. Specifically, the identification of the POI 110 may be affected by the positioning of the vehicle 100, such as when the vehicle 100 is slanted upward or downward while driving over hilly terrain. As an example, the orientation system 365 can include accelerometers, gyroscopes, and /or other similar sensors to detect changes in the orientation of the vehicle 100.

Other examples of satellite positioning systems that may be used here include the Russian Glonass system, the European Galileo system, the Chinese Beidou system, or any system that uses satellites from a combination of satellite systems, or any satellite system developed in the future, including the planned Chinese COMPASS system and the Indian Regional Navigational Satellite System. In addition, the location determination system 230 can use other systems (e.g., laser-based localization systems, inertial-aided GPS, triangulation or mutli-lateration of radio signals, and/or camera-based localization) to determine the location of the vehicle 100 or the POI 110.

In one arrangement, the digital maps that the location determination system 230 may access from the database 355 may be designed to include reference markers that correspond to various real-life POIs 110. For example, a building or a landmark that may be a POI 110 may have a corresponding digital reference marker embedded in or part of a digital map. The reference marker may include data about the POI 110 with which it corresponds, such as the physical coordinates or other positioning information of the POI 110, its name and address, a description of the POI 110 (such as any historical or architectural significance attached to the POI 110 or the nature of any business conducted there), hours of operation, contact particulars (phone numbers, emails addresses, etc.), images or video of the POI 110, the distance from the current position of the vehicle 100 to the POI 110, or an estimated driving time from the current position of the vehicle 100 to the POI 110. Other types of information may also be included with the reference markers, and additional information may be stored in another database 355 or may be retrieved from an external server (not shown). Moreover, although described as being embedded in or part of digital maps, the reference markers may be part of or associated with any suitable digital representation of a physical area, and reference markers may be generated for virtually any type and number of POIs 110.

The reference markers may assist in identifying POIs 110 when an inquiry is initiated. In particular, once a potential occupant vector is calculated, an extrapolation of the potential occupant vector may be performed (if necessary), and this extrapolation may lead to one or more of the reference markers. The location determination system 230 or some other device or system may perform this extrapolation. To narrow the focus of the extrapolation, the digital maps that are selected for this process may be based on the current position of the vehicle 100, as the position of the vehicle 100 may be within a reasonable distance of the POI 110 of interest. Once the corresponding reference marker is identified, the information about the POI 110 that is part of the reference marker that corresponds to that POI 110 can be returned. Additional information on this process will be presented below.

In one embodiment, the location determination system 230 may receive input from one or more systems of the vehicle 100 that is related to the overall operation of the vehicle 100. For example, the location determination system 230 may receive the current speed of the vehicle 100, the amount of fuel left in the fuel tank, and/or a current range based on that amount. This information may come from an operations system or center (not shown) of the vehicle 100. Of course, the location determination system 230 may receive other suitable types of information from any other component or system of the vehicle 100. This information may be useful in identifying a reference marker for a POI 110.

The occupant monitoring system 245, as explained above, may include various tracking devices and other similar equipment for monitoring and measuring certain characteristics of an occupant. As an example, the system 245 may include any combination of the eye tracker 250, the body tracker 255, the audio tracker 260, the pressure tracker 265, the respiratory tracker 270, or the cameras 297. The amount and number of trackers or sensors that may be part of the system 245 is not limited to this particular listing, as other components that are capable of determining or assisting in the determination of the direction of interest for an occupant may be employed here.

The eye tracker 245 can be designed to monitor the positioning, movement, or gaze of one more eyes of an occupant. Additionally, there are several techniques that may serve as solutions for the eye tracker 245. For example, the eye tracker 245 may be equipped with one or more light sources (not shown) and optical sensors (not shown), and an optical tracking method may be used. In this example, the light source may emit light in the direction of the eyes of the occupant, and the optical sensor may receive the light reflected off the eyes of the occupant. The optical sensor may then convert the reflected light into digital data, which can be analyzed to extract eye movement based on variations in the received reflections. Any part of the eyes may be the focus of the tracking, such as the cornea, the center of the pupil, the lens, or the retina. To limit distractions to the occupant, the light source may emit an infrared light.

In another arrangement, contact lenses having mirrors or magnetic-field sensors embedded in them may be placed over the eyes of the occupant, and readings may be taken from these lenses as the eyes of the occupant move. In yet another example, one or more electrodes may be positioned around the eyes of an occupant. Because the eyes of an occupant may serve as a steady electric potential field, movement of the eyes may be detected through measuring variations in the electric potentials. This example may be useful in dimly lit environments or if the occupant is wearing sunglasses or other objects that may interfere with eye tracking, like a thin veil. In fact, in one case, the electrodes may be embedded in the interfering object, such as in the frames of a pair of sunglasses, to enable the tracking process. This concept may also apply if the occupant is wearing a helmet, such as if the occupant is operating a motorcycle or an off-road vehicle.

The body tracker 255 may be configured to monitor the positioning of one or more body parts of an occupant. For example, the body tracker 255 may include one or more cameras (not shown) that can be positioned towards an occupant, and these cameras may capture reference images of a body part of the occupant, such as the occupant's head (including facial features) or shoulders. The reference images may include digital tags that are applied to certain feature points of the body part, such as the occupant's nostrils or mouth. The reference images may then be stored in one of the databases 355. When activated, the cameras of the body tracker 255 may capture one or more images of the relevant body part of the occupant, which may also have feature points that have been digitally tagged. The body tracker 255 can then compare in a chronological order the captured images with the reference images, such as by matching the tagged feature points and determining the distance and/or angle between the feature points. The body tracker 255 can then use his information to determine positional coordinates of the tracked body part. As an option, one or more sensors may be attached to the occupant, such as on a piece of clothing worn by the occupant. These sensors may communicate with the body tracker 255 to provide data to be used to determine the position of a body part of the occupant.

Other mechanisms may be used to monitor the positioning of one or more body parts of an occupant. For example, the body tracker 255 may include one or more acoustic generators (not shown) and acoustic transducers (not shown) in which the acoustic generators emit sound waves that reflect off the monitored body part and are captured by the acoustic transducers. The acoustic transducers may then convert the received sound waves into electrical signals that may be processed to determine the positioning of the body part. The sound waves used in this arrangement may be outside the scope of human (or animal) hearing. As another example, the body tracker 255 may include thermal imagers that may detect the positioning of the body part through analysis of thermal images of the occupant.

The audio tracker 260 can be configured to detect various sounds that may be attributed to the occupant and can then determine a potential orientation or positioning of the occupant based on them. These sounds may be generated directly by the occupant, such as through speech, breathing, or coughing, although such sounds may be produced indirectly by the occupant. Examples of indirect sounds include the noise produced from an occupant's clothing or from a seat supporting the occupant when the occupant moves.

In one embodiment, the audio tracker 260 can include one or more microphones (not shown) for capturing sound. A "microphone" is defined as any device, component, and/or system that can capture sound waves and can convert them into electrical signals. The microphones may be positioned throughout the passenger compartment 200 such that differences in the timing of the receipt of the sounds from the occupant at the microphones can be detected. For example, based on the positioning of the occupant's mouth, speech uttered by the occupant may reach a first microphone prior to reaching a second microphone. This timing difference may serve as the basis for a directional characteristic of the occupant and may be used to generate a potential positioning of the occupant. The magnitude of the received audio from the various microphones may also be compared to help determine the positioning of the occupant. For example, the receipt of a stronger signal in relation to a weaker signal may indicate the occupant is closer to the microphone receiving the signal with the higher magnitude.

In one particular example, the audio tracker 260 may assign priority to speech sounds because these sounds may emanate directly from an occupant's mouth and may provide a better indication of the direction in which the occupant is facing when the speech sounds are generated. The granularity of the audio tracker 260 may be increased by employing a greater number of microphones. In addition, arrays of microphones may be part of this configuration. In another example, the microphones of the audio tracker 260 may be fixed in their positions, or the locations or orientations of the microphones may be adjustable.

The pressure tracker 265 may be configured to determine pressure values or to detect changes in pressure values that are attributable to an occupant, and these changes may be used to help determine the position or orientation of the occupant. For example, the pressure tracker 265 may include any number of pressure sensors (not shown), and these sensors may be built into certain components of the passenger compartment 200 to detect the pressure changes from the occupant. As a more specific example, one or more pressure sensors may be built into a seat on which the occupant is situated. As the occupant moves to focus his or her sight on a POI 110, the pressure sensors may measure variations in the pressure generated by the occupant's body. As another example, one or more pressure sensors may detect subtle changes in air pressure that are caused by movement of the occupant. Pressure sensors may also be embedded within other components of the passenger compartment 200 to assist in the detection of pressure variations caused by the movement of the occupant. Examples include the steering wheel, the floor of the vehicle 100 or floor mats that may be positioned on the floor, or arm rests.

The pressure tracker 265 may receive these various pressure measurements from the different pressure sensors and can generate a potential positioning or orientation of the occupant. In one embodiment, the occupant may initially sit in a resting position, and reference pressures may be measured and stored in one of the databases 355. When the pressure measurements are received, the pressure tracker 265 may compare these measurements with the reference values to assist in the determination of the positioning of the occupant.

In one arrangement, the respiratory tracker 270 can be configured to detect concentrations of one or more gases in the passenger compartment 200. For example, the respiratory tracker 270 can include one or more gas sensors (not shown) to detect concentrations of carbon dioxide, which may be exhaled by the occupant while in the passenger compartment 200. The gas sensors may be situated throughout the passenger compartment 200 to detect the exhaled carbon dioxide from the occupants. In operation, if the occupant turns to face a POI 110, the occupant may be exhaling carbon dioxide in the general vicinity of one or more of the gas sensors. The gas sensors that are closest to the occupant's face may then detect increased concentrations of carbon dioxide from the occupant's breathing. Based on which gas sensors are reporting the increased concentrations of carbon dioxide, the respiratory tracker 270 may determine a potential positioning or orientation of the occupant.

In one arrangement, the occupant monitoring system 245 may rely on any suitable combination of trackers - including those examples described herein or others that may be used to determine the positioning of an occupant - to gather and provide data about the measured characteristics of the occupant. That is, the system 245 is not necessarily required to include all the trackers described above, as even a single tracker or a single set of trackers of a common type may be used here. Moreover, other trackers not illustrated here may be incorporated into the system 245. Once the occupant monitoring system 245 receives the data of the measured characteristics, the system 245 can generate one or more potential occupant vectors. Like the location determination system 230, the occupant monitoring system 245 may receive data about the operation of the vehicle 100, such as the speed or orientation of the vehicle 100, to assist in the generation of the potential occupant vectors. The potential occupant vector may provide an indication as to which location or POI 110 the occupant has directed his or her attention. In one embodiment, the system 245 may provide the potential occupant vector to the location determination system 230, which can then acquire positioning information that is directly associated with the POI. This data may then be used to facilitate the identification of a POI 110, as will be more fully explained below. Alternatively, the occupant monitoring system 245 may forward the potential occupant vector to another component or system without sending this data to the location determination system 230.

Referring to some of the other components of the hardware layer 325, the display device 240 may include a touch screen to enable interaction with the occupant. In addition, information that is obtained for the relevant POI 110 may be displayed on the display device 240. The display device 240 may also present the applications 335, one or more of the user interfaces 235 (see FIG. 2) and digital maps associated with the GPS unit 360, and any other elements that may be used to control or manipulate systems of the vehicle 100. As noted earlier, the display device 240 may be a HUD or a HUD may be part of the display device 240. Any of the information that may be displayed or any elements with which the occupant may interact can be displayed in the image 280 (see FIG. 2) projected by the HUD. Various technologies may be used here to enable contactless interaction with the image 280, such as through the use of one or more electric fields that can indicate an interaction based on disturbances created in the fields from the occupant's finger or a tool.

The speakers 285 may also be used to broadcast information about a POI 110 that the information-attainment system 300 has acquired. This output may supplement the display of the acquired information via the display device 240, or it may be in lieu of being displayed. The term "speaker" is defined as one or more devices, components, or systems that produce sound, whether audible to humans or not, in response to an audio signal input. In addition to providing information about a POI 110, the speakers 285 may broadcast sounds related to other functions of the vehicle 100, such as audible directions from the GPS unit 360 or music from a stereo system (not shown).

The hardware layer 325 may include any number of communication stacks 345, each of which may be configured for conducting communications in accordance with a specific frequency (or range of frequencies) and/or a particular communications protocol. For example, one of the communication stacks 345 may be configured for satellite communications, which can be used to support the GPS unit 360. As another example, one of the communication stacks 345 may be designed for Bluetooth, Near Field Communication (NFC) or Wi-Fi communications, relatively short-range protocols that enable wireless communications with the portable computing device 295 (see FIG. 2) and other communications equipment associated with the operation of the vehicle 100. Another of the communication stacks 345 may be set up to facilitate wireless communications over a cellular network (not shown), which can enable a user to make voice calls and perform data exchanges over such wide-area networks. An occupant may also conduct wide-area network communications through the portable computing device 295 when the device 295 is docked with the docking interface 290 or with one of the short-range communication stacks 345. Other protocols and types of communications may be supported by one or more of the communication stacks 345, as the information-attainment system 300 is not limited to these particular examples described here.

The docking interface 290, as noted earlier, may be configured to accept the portable computing device 295 (or other suitable devices), such as through a wired or wireless connection. In either case, the docking interface 290 may take advantage of one or more of the communication stacks 345 to communicate with the portable computing device 295 and to facilitate communications between the portable computing device 295 and any suitable communications network or equipment. This feature may permit information that is obtained about a POI 110 to be transferred to a portable computing device 295. Various applications that may be installed on the portable computing device 295 may then use the received information, such as a contacts application, a browser, a maps application, or a dialer. The docking interface 290 may also allow data stored on the portable computing device 295 to be transferred to and used by any suitable system of the vehicle 100, including music and contacts.

The central processor 340 can be configured to receive input from any number of systems of the vehicle 100, including those of the information-attainment system 300, and can execute programs or other instructions to process the received data. In addition, the central processor 340 may also request additional data from other resources and can provide output to the information-attainment system 300 or other systems of the vehicle 100.

For example, the central processor 340 may receive the input related to the inquiry for the POI 110 from the inquiry input system 215 (e.g., voice command or gesture) and can also receive from the location determination system 230 the positioning information (or other data) of the POI 110. In some cases, the occupant monitoring system 245 (or some other suitable component or system) may retrieve the positioning information from the location determination system 230 and can provide the central processor 340 with the positioning information. Alternatively, the occupant monitoring system 245 may provide the central processor 340 with the potential occupant vector, and the central processor 340 may then forward the potential occupant vector to the location determination system 230. In response, the location determination system 230 may then send the positioning information about the POI 110 to the central processor 340. As another alternative, the central processor 340 can be configured to receive raw data from the location determination system 230 and/or the occupant monitoring system 245 and can perform the processing that otherwise would be carried out by these systems 230, 245. For example, the central processor 340 may receive various inputs from the occupant monitoring system 245 and can generate the potential occupant vector. As another example, the central processor 340 may receive the positioning of the vehicle 100, can access the relevant digital maps, and can perform the extrapolation of the potential occupant vector to identify the proper reference marker associated with the POI 110.

In one arrangement, the central processor 340 may receive multiple sets of positioning information from the location determination system 230. In this case, the different sets of positioning information may be data that is representative of a plurality of candidate or potential POIs 110. That is, there may be several different potential POIs 110 based on the measured characteristics of the occupant; however, only one of them may be the actual POI 110 on which the occupant is focused. As another example, the occupant may be interested in multiple POIs at the same time or within a short amount of time, and information may need to be retrieved for the multiple number of POIs 110.

Once one or more POIs 110 are identified based on the inquiry and the received positioning information, the central processor 340 can acquire information about the identified POIs 110. For example, mapping data may be indexed and stored in one of the databases 355, and the central processor 340 can access this database 355 and provide the positioning information. The positioning information can be mapped against the relevant database 355, and the central processor 340 can fetch from the database 355 data associated with the positioning information. If multiple sets of positioning information are mapped against the database 355, then the central processor 340 may retrieve a collection of data associated with the multiple sets of positioning information. The data retrieved by the central processor 340 may be referred to as POI information.

The POI information from the database 355 may include any relevant data about the POI 110. Examples will be presented later. As another option, the central processor 340, once it is aware of the identity of the POI 110, may access one or more other resources for additional information about the identified POI. These resources may be additional databases (not shown) local to the vehicle 100, or they may be servers or services that are remote to the vehicle 100. For example, the central processor 340 may transmit a request for information about the POI 110 through one of the communication stacks 345, such as one that handles wide-area wireless communications. This request may eventually be delivered to one or more servers that can provide the additional information about the POI 110. In the case of local or remote data requests, the central processor 340 may provide identifying information about the POI 110 that it has obtained from the local database 355, such as a name, address, or positional coordinates.

Once the central processor 340 acquires the information about the POI 110, the central processor 340 can signal the display device 240, the speakers 285, or any other device or system that may enable the occupant to become aware of the information about the POI 110. In response, the information about the POI 110 may be displayed through the display device 240 or broadcast over the speakers 285. In one arrangement, the central processor 340 may request the user interface element responsible for presenting the information about the POI 110 to the occupant to request feedback from the occupant related to the presented information. This feature may enable the occupant to provide confirmation that the identified POI 110 is indeed the POI 110 that garnered the interest of the occupant. The central processor 340 can carry out iterations of this process if multiple potential POIs 110 are presented to the occupant. In such a case, the occupant may reject one or more presentations of potential POIs 110 until information about the correct or actual POI(s) 110 is presented.

Any suitable architecture or design may be used for the central processor 340. For example, the central processor 340 may be implemented with one or more general-purpose and/or one or more special-purpose processors, either of which may include single-core or multi-core architectures. Examples of suitable processors include microprocessors, microcontrollers, digital signal processors (DSP), and other circuitry that can execute software. Further examples of suitable processors include, but are not limited to, a central processing unit (CPU), an array processor, a vector processor, a field-programmable gate array (FPGA), a programmable logic array (PLA), an application specific integrated circuit (ASIC), and programmable logic circuitry. The central processor 340 can include at least one hardware circuit (e.g., an integrated circuit) configured to carry out instructions contained in program code.

In arrangements in which there is a plurality of central processors 340, such processors can work independently from each other or one or more processors can work in combination with each other. In one or more arrangements, the central processor 340 can be a main processor of the information-attainment system 300 or the vehicle 100. This description about processors may apply to any other processor that may be part of any system or component described herein, such as the inquiry input system 215, the location determination system 230, or the occupant monitoring system 245 and any of their associated components.

The memory units 350 can be any number of units and type of memory for storing data. As an example, the memory units 350 may store instructions and other programs to enable any of the components, devices, and systems of the information-attainment system 300 to perform their functions. As an example, the memory units 350 can include volatile and/or nonvolatile memory. Examples of suitable data stores include RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The memory units 350 can be a component of the central processor 340, or the memory units 350 can be communicatively connected to the central processor 340 (and any other suitable devices) for use thereby. These examples and principles presented here with respect to the memory units 350 may also apply to any of the databases 355 of the database layer 330.

As noted above, many of the devices described herein map received input against reference data stored in one of the databases 355. When mapped, the device performing the comparison may determine whether the received input matches the stored reference data. The term "match" or "matches" means that the received input and some reference data are identical. To accommodate variations in the received input, however, in some embodiments, the term "match" or "matches" also means that the received input and some reference data are substantially identical, such as within a predetermined probability (e.g., at least about 85%, at least about 90%, at least about 95% or greater) or confidence level.

As can also be seen, the information-attainment system 300 may include various types and numbers of cameras. A "camera" is defined as any device, component, and/or system that can capture or record images or light. As such, a camera can include a sensor that is simply designed to detect variations in light. The images may be in color or grayscale or both, and the light may be visible or invisible to the human eye. An image capture element of the camera (if included) can be any suitable type of image capturing device or system, including, for example, an area array sensor, a Charge Coupled Device (CCD) sensor, a Complementary Metal Oxide Semiconductor (CMOS) sensor, a linear array sensor, a CCD (monochrome). In one embodiment, one or more of the cameras of the system 300 may include the ability to adjust its magnification when capturing images (i.e., zoom-in or zoom-out). As an example, these cameras may automatically adjust their magnification to better capture objects that the cameras are focused on, such as an occupant making a gesture or leaning his or her body in a certain direction. Moreover, the cameras may be in fixed positions or may be pivotable to account for movement of the subject on which the cameras are focused.

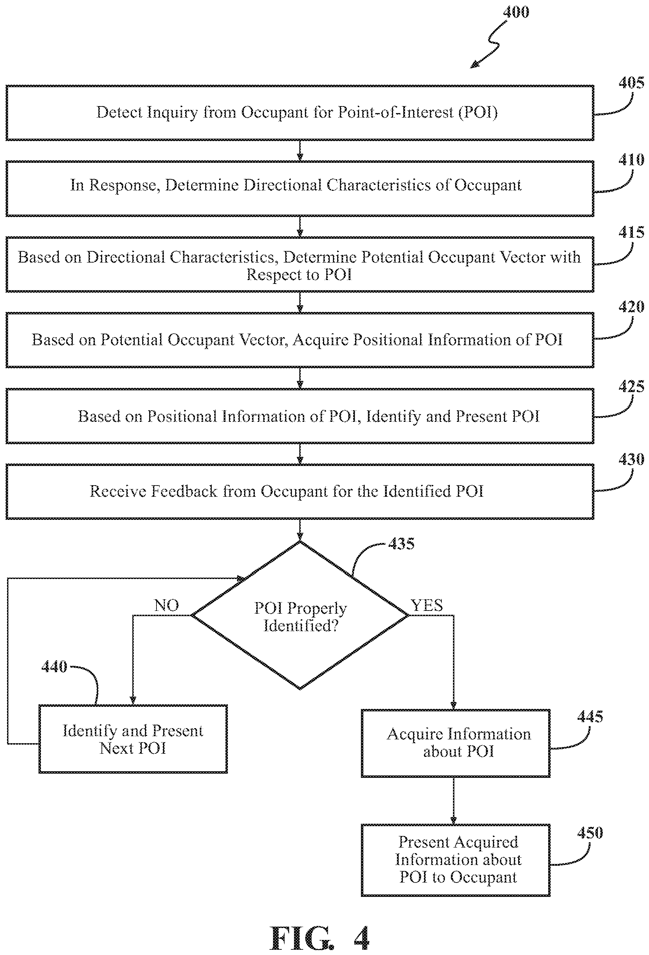

Now that various examples of systems, devices, elements, and/or components of the vehicle 100 have been described, various methods or processes for acquiring information about a POI will be illustrated. Referring to FIG. 4, a method 400 for acquiring such information is shown. The method 400 illustrated in FIG. 4 may be applicable to the embodiments described above in relation to FIGS. 1-3, but it is understood that the method 400 can be carried out with other suitable systems and arrangements. Moreover, the method 400 may include other steps that are not shown here, and in fact, the method 400 is not limited to including every step shown in FIG. 4. The steps that are illustrated here as part of the method 400 are not limited to this particular chronological order. Indeed, some of the steps may be performed in a different order than what is shown and/or at least some of the steps shown can occur simultaneously.

At step 405, an inquiry for a POI may be detected from an occupant of a vehicle. At step 410, in response to the inquiry, one or more directional characteristics of the occupant may be determined. Based on the directional characteristics, a potential occupant vector with respect to the POI may be determined, as shown at step 415. Based on the potential occupant vector, positional information of the POI may be acquired, as shown at step 420. At step 425, based on the positional information, the POI may be identified and presented. At step 430, feedback for the identified POI can be received from the occupant, and at decision block 435, a determination can be made as to whether the POI was properly identified. If not, the next POI may be identified and presented, as shown at step 440, and the method 400 can resume at decision block 435. If the POI was properly identified, the method 400 can resume at step 445, where information about the POI may be acquired. At step 450, information acquired about the POI may be presented to the occupant.

For example, referring to FIGS. 1-3, an occupant may develop an interest in a POI 110. In some cases, this POI 110 may be referred to as an intended POI 110 because it is the actual POI 110 in which the occupant shows interest. In view of this interest, the occupant may wish to obtain information about the intended POI 110. To initiate an inquiry, the occupant may select a relevant application 335 from the display device 240, which can cause a user interface (not shown) to appear. The occupant may make selections through this user interface, such as choosing the method of initiating the inquiry. In this example, the occupant may select an option from the user interface to provide a voice command, which may activate the voice recognition device 220. At this point, the occupant may speak a voice command, which can prompt the voice recognition device 220 to receive the command and process it. As another example, the occupant may perform some gesture that may initiate a similar process with the gesture recognition device 225. In an alternative arrangement, the occupant may bypass the launching of the application 335 and can simply utter the voice command or execute the gesture.

Once the inquiry is received, the inquiry input system 215 may signal the central processor 340, which in turn can signal the occupant monitoring system 245. The occupant monitoring system 245 may then take steps to track the occupant through one or more measureable characteristics of the occupant. In this example, the system 245 may signal the eye tracker 250 to monitor the movement and positioning or focus of the eyes of the occupant and may signal the body tracker 255 to determine a positioning of the head of the occupant. Of course, other trackers may be used to assist in determining the positioning of the occupant. For example, the audio tracker 260 may detect breathing sounds or speech emanating from the occupant and determine the positioning of the occupant based on the direction and/or magnitude of the captured sounds. In addition, the respiratory tracker 270 may detect increased concentrations of carbon dioxide exhaled by the occupant and can use this data to determine the positioning of the occupant. As another example, the pressure tracker 265 may detect pressure variations in the seat 267 in which the occupant is seated and can process this data to determine the occupant's positioning.

In one embodiment, the trackers that are used to measure the characteristics of the occupant may do so for a predetermined amount of time. During this time, the trackers may continuously or periodically measure their respective characteristics and can adjust their determinations of the positioning of the occupant accordingly. For example, as the eyes of the occupant focus on the intended POI 110 while the vehicle 100 continues to move, the eye tracker 250 may detect the corresponding eye movement or changes in eye focus during the predetermined time. Similarly, the body tracker 255 may continue to monitor the head of the occupant during the predetermined time. If the occupant's head moves during this time, such as when the occupant may turn his or her head to remain focused on the intended POI 110 as the vehicle 100 continues to move, the body tracker 255 may update its determination of the positioning of the occupant's head. The amount of time set aside for the trackers may be the same for each or some of the trackers or may be different for each or some of the trackers. Moreover, this predetermined amount of time may be adjusted to improve the operation of the trackers. In another arrangement, the amount of time set aside for monitoring can be random.

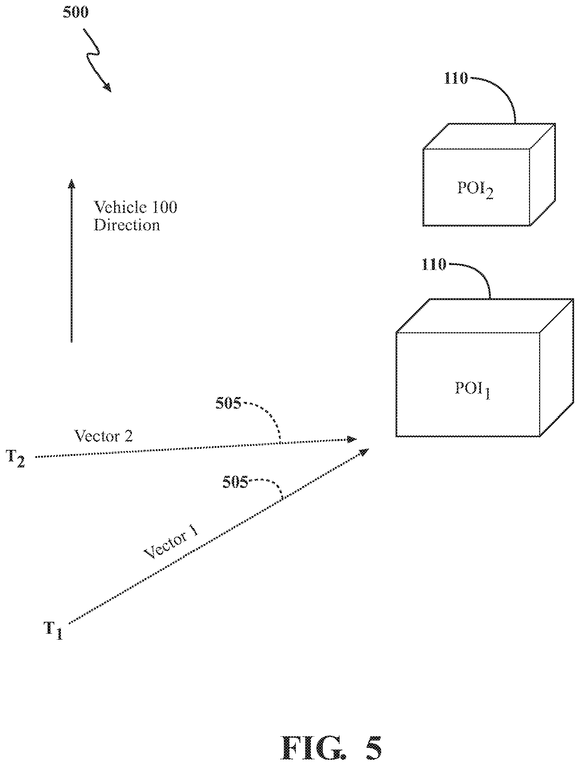

No matter the combination or techniques used to measure characteristics of the occupant to determine the occupant's positioning, the occupant monitoring system 245 may process the data received by the trackers to generate a potential occupant vector. For example, referring to FIG. 5, an example of an environment 500 that shows several potential occupant vectors 505 is shown. The environment 500 also shows two separate POIs 110, an intended POI 110, or POI₁ 110, which is the subject of the occupant's focus, and another POI 110, or POI₂ 110, which may not be of any interest to the occupant. In this example, the occupant is in a vehicle 100 traveling in the direction of the arrow with respect to the two different POIs 110.

The occupant monitoring system 245 may receive data from the relevant trackers, such as the eye tracker 250 and body tracker 255 in this case. At a first time, or T₁, the occupant monitoring system 245 may process the data received from the eye tracker 250 and the head tracker 255 and may generate a first potential occupant vector 505, or vector 1. If necessary, other data may also be used to calculate vector 1, including the speed of the vehicle 100 and input from the orientation system 365, such as the degree of elevation of the vehicle 100 if the vehicle 100 is currently traveling uphill. Once vector 1 is generated, the occupant monitoring system 245 or the central processor 340 may provide the data associated with the potential occupant vector 505 to the location determination system 230. The location determination system 230 may then reference the values of the potential occupant vector 505 against one or more digital maps or other representations of the surrounding area, which may be stored in one of the databases 355. As noted earlier, the digital maps that are selected may be based on the position of the vehicle 100, as the position of the vehicle 100 may be within a reasonable distance of the intended POI₁ 110.

As an example, at time T₁, the location determination system 230 may use the current position of the vehicle 100 as the origin of vector 1 and can plot vector 1 against the retrieved digital map. The location determination system 230 may then extrapolate vector 1 to identify the reference marker of the digital map that corresponds to the intended POI₁ 110. Where necessary, the extrapolation may also take into account various factors, such as the speed of the vehicle 100 or the degree of elevation of the vehicle 100.

In some cases, multiple extrapolations may be performed, which can help ensure an accurate identification of the reference marker. For example, at a subsequent time T₂, a second potential occupant vector 505, or vector 2, may be generated and plotted against the relevant digital map. For this case, the current position of the vehicle 100, which has changed in view of its motion, may be used to establish the origin of vector 2. The extrapolation of vector 2 may be conducted, and the reference marker that corresponds to the intended POI₁ 110 should be identified. As with the first extrapolation, certain factors, like the speed and orientation of the vehicle 100, may be considered.

Any number of extrapolations may be performed over the amount of time allotted for the identification process, including just one. Moreover, the speed of the vehicle 100 may or may not play a part in the number of calculations executed here. For example, a single plotting and extrapolation may be performed if the vehicle 100 is stopped, while multiple plottings and extrapolations may be carried out if the vehicle 100 is moving. Similarly, the number of reference markers for a given area of interest in the digital map may or may not be a factor in the number of plottings and extrapolations. For example, for a greater number of reference markers in a certain area of interest of the digital map, additional plottings and extrapolations may be executed to ensure greater accuracy for the identification of the reference marker corresponding to the intended POI₁ 110.

In some cases, an extrapolation may not be necessary to perform. For example, when the potential occupant vector 505 is plotted against the relevant digital map, a reference marker that corresponds to the intended POI 110 may be within the direct path, coverage area, or scope of the potential occupant vector 505. Even if a reference marker is within the direct path, coverage area, or scope of the plotted potential occupant vector 505, an extrapolation may still be performed to identify other reference markers that may be the one that corresponds to the intended POI 110. In addition, an extrapolation may be extended beyond an initial reference marker that is identified from the extrapolation. This extension may lead to other reference markers that may be the one that corresponds to the intended POI 110.

Once the location determination system 230 identifies one or more reference markers, the system 230 may forward data that is part of the reference markers to the central processor 340. As explained earlier, this data can be anything relevant to the existence of the POI 110 to which the reference marker corresponds, such as positioning information (coordinates or a physical address), images, a name, a description of the building or business that occupies the building, directions to the POI 110, or travel time and distance to the POI 110. The central processor 340 can receive this data and can cause it to be presented to the occupant in any suitable manner, such as on the display device 240 or by broadcasting it through the speakers 285. The presentation of the information to the occupant may also be done through the image 280, if the display device 240 offers a HUD.

In another example, the central processor 340 may acquire additional information about the identified POI 110, such as images, video, a rating associated with the operation of a business of the POI 110, an owner, resident, or lessee of the POI 110, an estimated market value, or contact particulars. The central processor 340 can obtain this information from a local store, such as one of the databases 355, or from a server or service that is remote to the vehicle 100. In particular, the central processor 340 may transmit a request through one of the communication stacks 345 to access the additional information from the remote resource. This request may also be facilitated by the portable computing device 295, which may access the information through its assigned cellular network. This additional information may also be presented to the occupant in any suitable manner.

Once the information about the identified POI 110 is presented to the occupant, the occupant may be afforded an opportunity to provide feedback as to the accuracy of the identified POI 110. For example, the occupant may select a user interface (UI) element on the display device 240 or may voice a phrase that confirms the selection of the identified POI 110. Other methods may be used to confirm the accuracy of the selection of the POI 110, including by the occupant providing feedback through any of the trackers of the occupant monitoring system 245 or via any other component or system of the vehicle 100. Examples include the occupant nodding his or her head in the affirmative (or negative) or performing some other gesture.

To increase the efficiency of the presentation of the data about the POI 110, less detail about the POI 110 may be initially presented, like an image and name of the POI 110, prior to receiving the feedback from the occupant. If the occupant confirms the selection, then the central processor 340 can instruct the display device 240 (or other component) to present additional information about the POI 110 or to display a message that asks if the occupant wishes to access such data.

In one embodiment, a plurality of potential or candidate (identified) POIs 110 may be presented to the occupant, who may then select the intended POI 110. For example, several candidate reference markers may be identified and data about the corresponding POIs 110 may be collected and sent to the central processor 340. The central processor 340 may then produce a collection of images of each of or at least some of the candidate POIs 110, and the display device 240 may show this collection of images to the occupant. The display device 240 may display these images simultaneously, such as through a table of images, or in an order that can be based on the most likely candidate POIs 110 being shown first. Once the occupant selects one (or more) of the candidate POIs 110, the information about the selected POI 110 may be presented to the occupant.

If an occupant provides feedback that indicates a particular POI 110 is not the intended POI 110 or otherwise fails to provide any feedback at all, information about additional candidate POIs 110 may be presented to the occupant. The presentation of the other candidate POIs 110 may continue until the occupant makes a selection indicating that the presented candidate POI 110 is the intended POI 110. If the occupant fails to select any potential or candidate POI 110, additional plottings of the potential occupant vector(s) 505 may be performed or other reference markers may be identified and processed in accordance with the description above.

As an option, the occupant may wish to transfer at least some of the information about the POI 110 to another device, such as the portable computing device 295. For example, a contacts application installed on the portable computing device 295 may create a contact listing for the POI 110 and incorporate some of the acquired information into the new contact listing. As another example, a maps application may set a marker at the location of the POI 110, which the occupant can later access after launching the maps application. In one arrangement, the occupant may utter voice commands that cause the acquired information about the POI 110 to be incorporated into an application or some other component or service of the portable computing device 295.

In some situations, one or more components or systems of the information-attainment system 300 may fail or otherwise be unavailable. For example, the GPS unit 360 of the location determination system 230 may be unavailable because the reception of the signal is blocked by a building or other obstruction near or over the vehicle 100. This scenario may also render other features of the location determination system 230 inoperable, such as the plotting and extrapolation processes or the availability of reference markers. Once the unavailability of a component or system is detected, alternative steps may be taken to enable continued performance.

As an example, in the case of at least some part of the location determination system 230 being unavailable, the occupant monitoring system 245 may signal the activation of the cameras 297. As previously explained, the cameras 297 may be configured to essentially track the occupant as the occupant fixates on a particular POI 110, and the cameras 297 may capture images external to the vehicle 100 that correspond to this POI 110. The captured images may be based on the potential occupant vector, given that the cameras 297 are focused in substantially the same direction as the occupant. The central processor 340 or another component or system can then map the captured images against one or more reference images that may be stored in one of the databases 355 or some other local or remote storage unit. As an example, the reference images may be part of a virtual map that is arranged by the superimposition of various images from different sources, like satellite imagery, aerial and land-based photography, and geographic information systems. The reference images may also include data about certain POIs 110 that are part of the reference images, the nature of which may be similar to that presented above with respect to the reference markers of the location determination system 230. The POIs 110 that are part of the reference images may be referred to as reference POIs 110. As an example, the data associated with the reference images may include positional information about the reference POIs 110. The selection of the reference images for the comparison with the captured images may be based on the last known position of the vehicle 100.

Once a match is detected, the central processor 340 may identify one or more candidate (reference) POIs 110 from the reference images. At this point, the candidate POIs 110 may be presented to the occupant in a manner similar to that previously described. After the occupant selects a candidate POI 110 as the intended POI 110, additional information about the intended POI 110 may be presented to the occupant.

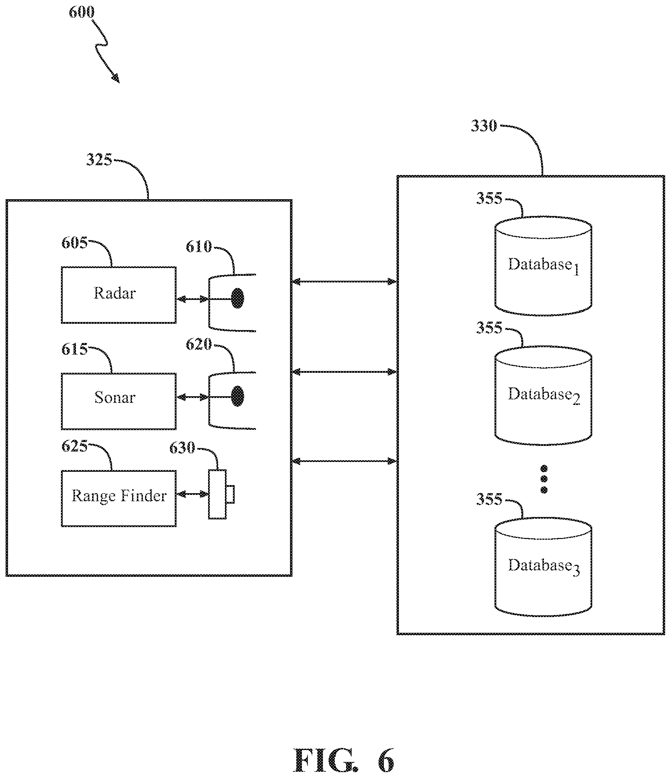

Other suitable alternative arrangements may be realized to account for failures or unavailability of other systems or components. Referring to FIG. 6, an embodiment 600 illustrating a portion of an alternative hardware layer 325 is shown. This alternative hardware layer 325 may supplement the hardware layer 325 illustrated in FIG. 3. As also shown here, the alternative hardware layer 325 may be communicatively coupled with one or more of the databases 355 of the database layer 330.

In one example, the alternative hardware layer 325 may include a radar unit 605, a radar antenna or array 610, a sonar unit 615, a sonar transmitter/receiver 620, a range finder 625, and a laser 630. These components may be positioned at any suitable locations of the vehicle 100, and in some cases, the direction in which these components are focused may be in accordance with the direction in which an occupant is facing, which may be determined by the occupant monitoring system 245.

The radar unit 605 can be configured to generate radio waves that the radar antenna 610 may emit and capture reflections thereof. Through digital signal processing, the radar unit 610 can extract information from the reflections that are captured by the radar antenna 610. Based on the extracted information, the radar unit 610 may construct a digital signature of one or more objects surrounding the vehicle 100 from which the radio waves were reflected. One of the databases 355 may store a number of reference digital signatures that may have been created from a mapping service using radar or some other objection-detection method. The reference digital signatures correspond to one or more POIs 110, and data about the corresponding POIs 110 may be tagged with the reference digital signatures. The generated digital signatures may be mapped against the reference digital signatures until one or more potential matches are identified. Also, the reference digital signatures that are selected for the comparisons with the generated digital signatures may be based on the current position of the vehicle 100. The data tagged to the identified reference digital signatures may then be retrieved and presented to the occupant in accordance with previous examples.

Through a similar principle, the sonar unit 615 may be configured to generate sound waves that may be broadcast by the sonar transmitter/receiver 620, which can capture their reflections as they bounce off objects within a certain range. The sonar unit 615 may also be configured to process the reflected sound waves to generate digital signatures of the objects from which the sound waves were reflected. The generated signatures can then be mapped against a set of reference digital signatures until one or more matches are identified. Data about the identified digital signatures can then be retrieved and presented to the occupant as a potential or candidate POI 110.

In one arrangement, the radar unit 605 and the sonar unit 615 may be used in the event the occupant monitoring system 245 or some component of the system 245 is down. That is, an object-detection system, like the ones presented here, may provide sweeping coverage of the area surrounding the vehicle to help identify POIs 110 if the occupant monitoring system 245 is unavailable. Such an object-detection system, however, may be used to supplement or confirm the function of identifying POIs 110, as in the case of where the occupant monitoring system 245 is indeed available.

In one embodiment, the range finder 625 may signal the laser 630 to generate a laser beam and to aim the laser beam in a particular direction. This direction may be in a direction established by a potential occupant vector created by the occupant monitoring system 245. The range finder 625 may process the beam reflected off the relevant object and returned to the laser 630 and can determine a distance between the vehicle 100 and the object. If the current position of the vehicle 100 is known, the range finder 625 (or some other component or system) can plot the current position of the vehicle 100, the direction established by the occupant monitoring system 245, and the range between the vehicle 100 and the object from which the beam was reflected against a digital map in one of the databases 355. Similar to previous descriptions, a reference marker may be identified and data associated with it may be retrieved and presented to the occupant as an identified POI 110. The use of a range finder 625 may supplement the location determination system 230, such as to confirm its findings with respect to an identified POI 110. In another case, however, if the location determination system 230 is unable to extrapolate the potential occupant vectors or to otherwise properly identify the reference markers, the range finder 625 may serve as an alternative. Other systems that are used to detect objects or determine parameters associated with them may be incorporated into the information-attainment system 300 other than the examples listed here.

It will be appreciated that arrangements described herein can provide numerous benefits, including one or more mentioned herein. For example, arrangements described herein can enable an occupant to obtain information about a POI on an automated basis. Arrangements described herein can permit the occupant to provide input related to an inquiry for the POI. Arrangements described herein can monitor any number of measurable characteristics of the occupant to help identify the direction in which the occupant is focused and to acquire positioning information about the POI that is the subject of that focus. Arrangements described herein can enable the identification of the POI and can facilitate the retrieval of information about the POI from any suitable number and type of resource. Arrangements described herein also allow for the acquired information to be presented to the occupant in any suitable form.

The flowcharts and block diagrams in the figures illustrate the architecture, functionality, and operation of possible implementations of systems, methods and computer program products according to various embodiments. In this regard, each block in the flowcharts or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved.

The systems, components and/or processes described above can be realized in hardware or a combination of hardware and software and can be realized in a centralized fashion in one processing system or in a distributed fashion where different elements are spread across several interconnected processing systems. Any kind of processing system or other apparatus adapted for carrying out the methods described herein is suited. A typical combination of hardware and software can be a processing system with computer-usable program code that, when being loaded and executed, controls the processing system such that it carries out the methods described herein. The systems, components and/or processes also can be embedded in a computer-readable storage, such as a computer program product or other data programs storage device, readable by a machine, tangibly embodying a program of instructions executable by the machine to perform methods and processes described herein. These elements also can be embedded in an application product which comprises all the features enabling the implementation of the methods described herein and, which when loaded in a processing system, is able to carry out these methods.

Furthermore, arrangements described herein may take the form of a computer program product embodied in one or more computer-readable media having computer-readable program code embodied, e.g., stored, thereon. Any combination of one or more computer-readable media may be utilized. The computer-readable medium may be a computer-readable signal medium or a computer-readable storage medium. The phrase "computer-readable storage medium" means a non-transitory storage medium. A computer-readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer-readable storage medium would include the following: a portable computer diskette, a hard disk drive (HDD), a solid state drive (SSD), a read-only memory (ROM), an erasable programmable read-only memory (EPROM or Flash memory), a portable compact disc read-only memory (CD-ROM), a digital versatile disc (DVD), an optical storage device, a magnetic storage device, or any suitable combination of the foregoing. In the context of this document, a computer-readable storage medium may be any tangible medium that can contain, or store a program for use by or in connection with an instruction execution system, apparatus, or device.

Program code embodied on a computer-readable medium may be transmitted using any appropriate medium, including but not limited to wireless, wireline, optical fiber, cable, RF, etc., or any suitable combination of the foregoing. Computer program code for carrying out operations for aspects of the present arrangements may be written in any combination of one or more programming languages, including an object oriented programming language such as Java™, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The terms "a" and "an," as used herein, are defined as one or more than one. The term "plurality," as used herein, is defined as two or more than two. The term "another," as used herein, is defined as at least a second or more. The terms "including" and/or "having," as used herein, are defined as comprising (i.e. open language). The phrase "at least one of ... and ...." as used herein refers to and encompasses any and all possible combinations of one or more of the associated listed items. As an example, the phrase "at least one of A, B, and C" includes A only, B only, C only, or any combination thereof (e.g. AB, AC, BC, or ABC).

Aspects herein can be embodied in other forms without departing from the spirit or essential attributes thereof. Accordingly, reference should be made to the following claims, rather than to the foregoing specification, as indicating the scope of the invention.

## Claims

1. An information-attainment system, comprising:
an inquiry input system that is configured to receive input from an occupant of a vehicle, wherein the input is related to an inquiry for a point-of-interest (POI);
an occupant monitoring system that is configured to determine a potential occupant vector with respect to the POI;
a location determination system that is configured to acquire positioning information that is directly associated with the POI based on the potential occupant vector; and
a processor that is configured to:
receive from the inquiry input system the input related to the inquiry for the POI;
receive from the location determination system the positioning information directly associated with the POI based on the potential occupant vector;
in response to the receipt of the input related to the inquiry for the POI and the positioning information directly associated with the POI based on the potential occupant vector, identify the POI; and
acquire information associated with the POI that is responsive to the inquiry.

2. The system of claim 1, wherein the occupant monitoring system includes one or more cameras that are configured to capture images external to the vehicle in a direction that is based on the potential occupant vector.

3. The system of claim 2, wherein the processor is further configured to compare the captured images from the cameras with a database of stored reference images to determine alternative positioning information directly associated with the POI.

4. The system of claim 1, wherein the occupant monitoring system includes one or more tracking devices that are configured to track the occupant through one or more measurable characteristics to determine the potential occupant vector with respect to the POI.

5. The system of claim 4, wherein the tracking device is an eye tracker, a body tracker, an audio tracker, a pressure tracker, or a respiratory tracker and the measurable characteristics include eye position, eye movement, head position, head movement, direction of audio propagation, magnitude of audio, differences in air pressure, seating pressure, or concentrations of one or more gases.

6. The system of claim 1, wherein the inquiry input system includes a voice recognition device or a gesture recognition device.

7. The system of claim 1, further comprising a display device, wherein the processor is further configured to provide the information associated with the POI that is responsive to the inquiry by signaling the display device to display the information, wherein the displayed information includes an address of the POI, directions to the POI, an estimated time of travel to the POI, a rating of the POI, a commercial or business name of the POI, an owner, resident, or lessee of the POI, an estimated market value of the POI, or contact information of the POI.

8. The system of claim 7, wherein the display device is a heads-up display device or an in-dash display device.

9. The system of claim 1, further comprising a communication stack that is configured to exchange communication signals with one or more portable computing devices and wherein the processor is further configured to direct the information responsive to the inquiry to the portable computing device via the communication stack.

10. An information-attainment system for a vehicle, comprising:
an input inquiry device that is configured to receive an inquiry from an occupant for a point-of-interest (POI) located external to the vehicle;
one or more tracking devices that are configured to monitor at least one measurable directional characteristic of an occupant of the vehicle for determining a potential occupant vector with respect to the POI;
a location determination device that is configured to acquire positional information of the POI; and
a display device that is configured to display information about the POI that is responsive to the inquiry, wherein the information that is responsive to the inquiry arises from the potential occupant vector determined with respect to the POI and the positional information of the POI.

11. The system of claim 10, further comprising a docking interface that is configured to establish a connection with a portable computing device and to transfer at least a portion of the information that is responsive to the inquiry to the portable computing device to enable the information that is responsive to the inquiry to be used by one or more applications installed on the portable computing device.

12. The system of claim 10, wherein one of the tracking devices is an eye tracker and another one of the tracking devices is a head tracker and wherein one of the measurable directional characteristics of the occupant is eye positioning of the occupant and another one of the measurable directional characteristics of the occupant is head positioning of the occupant.

13. The system of claim 10, wherein the potential occupant vector at least includes a direction in which the occupant is focused.

14. A method for acquiring information about a point-of-interest (POI) that is external to a vehicle, comprising:
detecting an inquiry from an occupant of the vehicle for the POI;
in response to the inquiry, determining one or more directional characteristics of the occupant;
based on the directional characteristics, determining a potential occupant vector with respect to the POI;
based on the potential occupant vector, acquiring positional information of the POI;
based on the positional information of the POI, identifying the POI; and
providing, to the occupant, information about the POI that is responsive to the inquiry.

15. The method of claim 14, wherein identifying the POI comprises:
identifying one or more potential POIs; and
receiving feedback from the occupant to select the POI from the one or more potential POIs.

16. The method of claim 14, further comprising accessing one or more databases or services to obtain the information about the POI that is responsive to the inquiry, wherein the databases or services are local to the vehicle or are external to the vehicle.

17. The method of claim 14, further comprising:
detecting an unavailability of the positional information of the POI;
in response to the detection of the unavailability of the positional information of the POI, obtaining one or more images of a surrounding area of the vehicle based on the potential occupant vector; and
comparing the images of the surrounding area of the vehicle with one or more databases of reference images to determine alternative positional information of the POI.

18. The method of claim 14, further comprising detecting a communicative coupling of a portable computing device having installed thereon one or more applications and wherein providing to the occupant the information about the POI that is responsive to the inquiry comprises transmitting at least part of the information about the POI to the computing device for use by the applications.

19. The method of claim 14, wherein detecting an inquiry from the occupant for the POI comprises receiving a voice command from the occupant that is designed to initiate the providing of the information about the POI that is responsive to the inquiry.

20. The method of claim 14, wherein determining one or more directional characteristics of the occupant comprises monitoring eye positioning of the occupant, head positioning of the occupant, or voice direction of the occupant.
